# EUROPÄISCHE PATENTANMELDUNG

(11) **EP 1 382 491 A1**
(43) Veröffentlichungstag der Anmeldung: **21.01.2004**
(21) Anmeldenummer: 03015947.9
(22) Anmeldetag: 13.07.2003
(51) Int. Cl.: B60R 7/04

(54) **Halterung für auf einem Autositz abzustellende Gegenstände**

(30) Priorität: 14.07.2002 DE 10231900
(71) Anmelder: Hüttlinger, Josef, 87789 Woringen (DE)
(72) Erfinder: Hüttlinger, Josef, 87789 Woringen (DE)

(57) **Zusammenfassung**

Die Erfindung betrifft eine Halterung (1) für auf einem Autositz (6) abzustellende Gegenstände (12).

Die Erfindung zeichnet sich durch ein Band (2) aus, das an der Rückenlehne (7) eines Autositzes (6) befestigbar und zumindest in seiner Längserstrekkung dehnbar ausgebildet ist.

## Beschreibung

Die Erfindung betrifft eine Halterung für auf einem Autositz abzustellende Gegenstände.

Es gibt Fälle, bei denen man gezwungen ist, einen oder mehrere Gegenstände auf dem Sitz eines Autos, insbesondere auf dem Beifahrersitz abzustellen. Um zu vermeiden, dass der wenigstens eine Gegenstand beim Autofahren herabfällt, versucht man mit dem Sicherheitsgurt diesen Gegenstand so gut es geht zu sichern. Diese Art der Sicherung ist mangelhaft.

Es ist Aufgabe der Erfindung, eine Halterung für auf einem Autositz abzustellende Gegenstände aufzufinden, die eine bessere Absicherung der Gegenstände, als bisher bekannt, erlaubt.

Die Lösung schlägt als Halterung ein Band vor, das an der Rückenlehne des Autositzes befestigbar und zumindest in seiner Längserstreckung dehnbar ausgebildet ist.

Die aufgefundene Lösung lässt zwei unterschiedliche Halterungen entstehen. Eine erste vorteilhafte Halterung, die als geschlossenes Band gestaltet ist und die sich von oben her, die Rückenlehne horizontal umfassend, auf diese aufstülpen lässt, sowie eine zweite zweckmäßige Halterung, die als nicht geschlossenes Band gestaltet an ihren beiden Enden mit Befestigungsmitteln ausgestattet ist, die sich an Befestigungsmitteln, die sich in geeigneter Weise an den beiden seitlichen, nach unten führenden Wangen einer Rückenlehne befinden, beispielsweise einhängen oder anderweitig befestigen lassen. Beide Lösungen nutzen in vorteilhafter Weise die Schalenform der Rückenlehnen aus. Die vor der Anlehnfläche der Rückenlehne vorbeiführende Halterung bildet mit der Anlehnfläche eine von oben her zugängliche Öffnung, in welche sich Gegenstände von oben her einschieben lassen und bei entsprechender Dicke bei der Halterung eine Spannwirkung erzeugen, welche die auf dem Sitz aufliegenden Gegenstände gegen die Rückenlehne presst. Die Spannwirkung wird durch die dehnbare Ausbildung der Halterung erreicht.

Die Erfindung wird anhand von zwei Ausführungsbeispielen näher erläutert. Es zeigt
- Fig. 1: eine in sich geschlossene Halterung;
- Fig. 2: eine Halterung von bestimmter Länge sowie
- Fig. 3: einen Autositz mit daran angeordneter Halterung und mit Gegenständen, die von der Halterung gehalten werden.

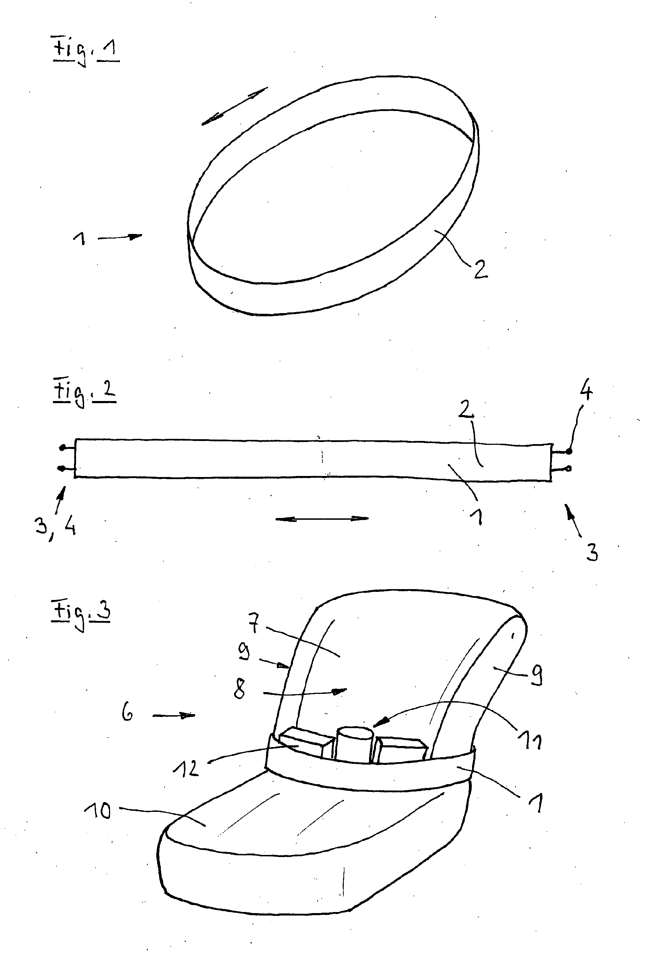

Die in Fig. 1 dargestellte Halterung 1 ist durch ein geschlossenes Band 2 gebildet. Die Halterung 1 besteht aus dehnbarem Material oder weist dehnbare Abschnitte auf, wobei die Dehnbarkeit in erster Linie so ausgerichtet ist, dass sich die Halterung 1 in ihrer Längserstreckung, siehe Doppelpfeil, verlängern und wieder auf die ursprüngliche Länge zurückbringen lässt. Das Band 2 ist bevorzugt aus einer dehnbaren Textilie gebildet, etwa so wie ein dehnbarer Hosengürtel. Es sind jedoch auch andere bekannte dehnbare Stoffe anwendbar. Die Art der Dehnbarkeit kann auch dreidimensional sein. Die im Beispiel gezeigte Halterung 1 lässt sich über eine Rückenlehne 7 eines Autositzes 6 stülpen.

Fig. 2 zeigt eine Halterung 1 mit einer vorbestimmten Länge. Die Eigenschaften dieser ebenfalls aus einem Band 2 bestehenden Halterung 1 sind die gleichen wie in Fig. 1 beschrieben. An den beiden Enden 3 der Halterung 1 sind für den Fachmann geläufige Befestigungsmittel 4 vorgesehen, die in Eingriff mit geeigneten Befestigungsmitteln 4 bringbar sind, die an den seitlichen Wangen 9 der Rückenlehne 7 eines Autositzes 6 angeordnet sind, vgl. auch Fig. 3. Alternativ können die an den Enden 3 des Bandes 2 befindlichen Befestigungsmittel 4 so ausgebildet sein, dass die Befestigungsmittel 4 des einen Endes 3 mit den Befestigungsmitteln 4 des anderen Endes 3 in Eingriff bringbar sind, so dass man wieder ein geschlossenes Band 2 erhält.

In Fig. 3 ist ein Autositz 6 dargestellt, um dessen Rückenlehne 7 eine Halterung 1 entsprechend Fig. 1 übergestülpt ist. Die Halterung 1 ist hochkant und horizontal angeordnet. Zwischen der konkaven Anlehnfläche 8 der Rückenlehne 7 und der gespannten Halterung 1 sind in der entstandenen Öffnung 11 von oben her Gegenstände 12 eingefügt, die am Sitz 10 aufliegen können und die durch die gedehnte Halterung 1 gegen die Rückenlehne 7 gepresst sind. Aus der Zeichnung ist deutlich ersichtlich, dass eine Halterung 1 der vorab beschriebenen Art aufgrund ihrer Dehnbarkeit entscheidende Vorteile gegenüber einem Sicherheitsgurt bietet, da dessen Beckenund Schultergurt nicht in sich dehnbar ausgebildet sind.

## Patentansprüche

1. Halterung (1) für auf einem Autositz (6) abzustellende Gegenstände (12), **gekennzeichnet durch** ein Band (2), das an der Rückenlehne (7) eines Autositzes (6) befestigbar und zumindest in seiner Längserstreckung dehnbar ausgebildet ist.

2. Halterung nach Anspruch 1, **dadurch gekennzeichnet, dass** das Band (2) dehnbare Abschnitte aufweist.

3. Halterung nach Anspruch 1 oder 2, **dadurch gekennzeichnet, dass** das Band (2) als in sich geschlossenes Teil ausgebildet ist.

4. Halterung nach Anspruch 1 oder 2, **dadurch gekennzeichnet, dass** das Band (2) eine vorbestimmte Länge aufweist und an seinen Enden (3) mit Befestigungsmitteln (4) ausgestattet ist.

5. Halterung nach einem der Ansprüche 1 bis 4, **dadurch gekennzeichnet, dass** das Band (2) aus einer dehnbaren Textilie besteht.
